# EUROPÄISCHE PATENTSCHRIFT

(11) **EP 1 394 017 B1**
(45) Veröffentlichungstag und Bekanntmachung des Hinweises auf die Patenterteilung: **18.11.2009**
(21) Anmeldenummer: 03019342.9
(22) Anmeldetag: 27.08.2003
(51) Int. Cl.: B62D 11/18, B62D 6/00, B62D 3/02

(54) **Lenkung und Verfahren zur Lenkung**
Steering and steering process
Direction et procédé de direction

(30) Priorität: 29.08.2002 US 230724
(43) Veröffentlichungstag der Anmeldung: 03.03.2004
(73) Patentinhaber: DEERE & COMPANY, Moline, Illinois 61265-8098 (US)
(72) Erfinder: Hutchison, Wayne Robert, Mayville WI 53050 (US); Marchese, David Lewis, Gaithersburg MD 20878 (US)
(74) Vertreter: Holst, Sönke

(56) Entgegenhaltungen:
- WO-A-02/36410
- US-A- 5 719 459
- US-A- 6 000 491
- US-A- 6 155 377
- US-A1- 2003 050 145
- US-B1- 6 196 342
- PATENT ABSTRACTS OF JAPAN Bd. 1997, Nr. 03, 31. März 1997 (1997-03-31) -& JP 08 310426 A (MITSUBISHI HEAVY IND LTD), 26. November 1996 (1996-11-26)

## Beschreibung

Die Erfindung betrifft eine Lenkung eines Fahrzeugs mit einer Lenkeinheit, welche eine von einer Lenkeinrichtung kommende Lenkeingangsbewegung in eine Lenkausgabebewegung umwandelt, welche zur Bestimmung der Fahrtrichtung des Fahrzeugs auf wenigstens ein Rad des Fahrzeugs wirkt, wobei das Ausmaß der Lenkeingangsbewegung und das Ausmaß der Lenkausgabebewegung in einem Übersetzungsverhältnis zueinander stehen, welches in Abhängigkeit von dem Ausmaß der Lenkeingangsbewegung variiert, gemäss dem Oberbegriff des Anspruchs 1, und bekannt aus EP-A2-1 574 420.

Wenn eine Bedienungsperson eines Fahrzeugs, wie beispielsweise einem Traktor, eine Lenkeinrichtung bewegt bzw. ein Lenkrad dreht, reagiert das Fahrzeug, indem es seine Fahrtrichtung verändert. Bei konventionellen Fahrzeugen oder Traktoren ist das Lenkrad bzw. die Lenkeinrichtung mit einer Lenkung bzw. einem Lenkgestänge verbunden, welches wiederum mit vorderen, frei drehbaren Rädern verbunden ist. Wenn eine Bedienungsperson das Lenkrad dreht, schwenken die vorderen Räder im oder gegen den Uhrzeigersinn. Bei einer Art von Traktor, welche in der Lage ist, zumindest im Wesentlichen auf der Stelle zu drehen (Zero-Turn), rotieren hintere, angetriebene Räder unabhängig voneinander. Die Bedienungsperson steuert sowohl die Geschwindigkeit als auch die Fahrtrichtung des Fahrzeugs durch eine Steuerung der Bewegung der angetriebenen Räder relativ zueinander. In diesem Fall ist die Lenkung wirksam mit den angetriebenen Rädern verbunden. Wenn eine Bedienungsperson das Lenkrad dreht, bewirkt dies, dass die angetriebenen Räder unterschiedlich schnell rotieren, wodurch der Traktor bzw. das Fahrzeug die Fahrtrichtung verändert bzw. umschwenkt.

Unabhängig von der Art des Traktors weist die Lenkung üblicherweise ein Getriebe mit einem festen Übersetzungsverhältnis auf. Dieses feste Übersetzungsverhältnis bestimmt den Grad zu dem sich das Lenkgestänge bewegt, wenn die Bedienungsperson das Lenkrad dreht. Daher weist das Fahrzeug ein festes Lenkverhalten bzw. eine feste Lenkempfindlichkeit auf.

Abhängig von den Fähigkeiten einer Bedienungsperson kann es für diese schwierig sein, derartige Fahrzeuge, insbesondere bei niedrigen Geschwindigkeiten, zu steuern. Zur Unterstützung kann das Lenkübersetzungsverhältnis erhöht werden, so dass ein Drehen an einem Lenkrad eine geringere Wirkung auf die Fahrtrichtungsänderung ausübt. Obwohl die Lenkung nun nicht länger so empfindlich ist, muss das Lenkrad nun relativ häufig gedreht werden, um eine bestimmte Drehung auszuführen.

Die WO-A-0019127 zeigt ein Fahrzeug mit einem hydrostatischen Antrieb, durch den das Fahrzeug angetrieben und gelenkt wird. Das Fahrzeug weist ein zwischen einem Lenkrad und einer Taumelscheibe angeordnetes Lenkgestänge auf, welches derart ausgebildet ist, dass es die Empfindlichkeit der Lenkung reduziert, wenn das Lenkrad zumindest annähernd in einer Geradeausstellung befindet.

Die US-B-6,196,342 zeigt eine Lenkung, die ein Fahr-LenkGetriebe derart steuert, dass das Fahrzeug sowohl während einer Vorwärts- als auch bei einer Rückwärtsfahrt in die Richtung dreht, in die das Lenkrad bewegt wird.

Die ältere, nachveröffentlichte EP-A2-1 574 420 zeigt eine Drehzahländerungs-Betätigungsvorrichtung, die ein Paar rechter und linker Drehzahländerungs-Betätigungseinheit aufweist, von denen jede ein erstes bewegliches Element, das durch ein Drehzahländerungs-Betätigungselement betätigt wird, um zu drehen, ein zweites bewegliches Element, das mit einem Eingabeabschnitt für den Drehzahländerungsbetätigungsbetrag des der stufenlos veränderlichen Getriebes direkt oder indirekt durch ein Getriebemittel verbunden ist, um die Drehzahl des stufenlos veränderlichen Getriebes zu ändern, ein drittes bewegliches Element, ein viertes bewegliches Element und ein fünftes bewegliches Element, aufweist, die zwischen das erste bewegliche Element und das zweite bewegliche Element eingefügt sind.

Das der Erfindung zugrunde liegende Problem wird darin gesehen, dass bekannte Lenkungen ein unbequemes und ermüdendes Lenkverhalten aufweisen.

Dieses Problem wird erfindungsgemäß durch die Lehre der Patentansprüche 1 bzw. 9 gelöst, wobei in den weiteren Patentansprüchen die Lösung in vorteilhafter Weise weiterentwickelnde Merkmale aufgeführt sind.

Auf diese Weise wird eine Lenkung mit einem variablen Übersetzungsverhältnis und somit einer variablen Lenkempfindlichkeit zur Verfügung gestellt, welche das Lenkverhalten eines Fahrzeugs verbessert. Eine derartige Lenkung kann an einem Fahrzeug eingesetzt werden, welches die Fahrtrichtung basierend auf einer Geschwindigkeitsdifferenz zwischen seinen angetriebenen Rädern ändert. Die Lenkung kann mit einer Lenkeinrichtung, wie einem Lenkrad, verbunden sein, welches wiederum über einen oder mehrere Lenkarme mit einem Lenkgetriebe verbunden ist. Das Lenkgetriebe wirkt wiederum mit einem Fahrgetriebe des Fahrzeugs zusammen, welches die Drehgeschwindigkeit angetriebener Räder relativ zueinander steuert.

Um dieses variable Übersetzungsverhältnis zu erzielen, weist die Lenkung eine Lenkeinheit auf, welche wiederum ein mit einem Folgerelement zusammenwirkendes Nockenelement aufweist. Im Einsatz führt eine Bedienungsperson beispielsweise eine halbe Drehung einer Lenkeinrichtung in Form eines Lenkrades aus und erzeugt so eine Lenkeingangsbewegung. Diese Lenkeingangsbewegung wird beispielsweise über eine Lenkwelle etc. an das Nockenelement übertragen. Das Nockenelement wiederum kann mit einem Leitelement versehen sein, welches ein Profil aufweist, durch das das Folgerelement, welches eine Lenkausgabebewegung erzeugt, geführt wird. Aufgrund des Profils des Leitelements wird das Verhältnis zwischen der Lenkeingangsbewegung und der Lenkausgabebewegung innerhalb eines Bereichs in Abhängigkeit von dem Ausmaß bzw. der Stärke der Lenkbewegung variieren. Der genaue Variationsbereich hängt von dem bestimmten Profil bzw. der Form des Leitelements ab. Vorzugsweise ist das Leitelement bzw. dessen Profil derart ausgebildet, dass das Übersetzungsverhältnis bei geringen Drehungen verhältnismäßig groß ist. Solch ein Übersetzungsverhältnis verringert die Wahrscheinlichkeit, dass eine Bedienungsperson Lenkschwierigkeiten bei geringen Fahrgeschwindigkeiten hat. Ein derartiger Bereich von Übersetzungsverhältnissen unterstützt eine Bedienungsperson auch bei verhältnismäßig weiten Kurven, in dem das Ausmaß an Lenkeingangsbewegung nur gering sein muss.

In der Zeichnung ist ein nachfolgend näher beschriebenes Ausführungsbeispiel der Erfindung dargestellt. Es zeigt:
- Fig. 1: eine Seitenansicht eines Fahrzeugs, welches eine Lenkung gemäß der vorliegenden Erfindung aufweist,
- Fig. 2: eine Ansicht eines Getriebezusammenbaus und einer Lenkung des Fahrzeugs von oben,
- Fig. 3: eine Ansicht des Getriebezusammenbaus und der Lenkung aus Fig. 3 von unten betrachtet,
- Fig. 4: eine Ansicht des Getriebezusammenbaus und der Lenkung von vorn und unten betrachtet,
- Fig. 5: eine Ansicht des Getriebezusammenbaus und der Lenkung von hinten und oben,
- Fig. 6: einen Lenkungsumkehrmechanismus,
- Fig. 7: einen Solenoid des Lenkungsumkehrmechanismus aus Fig. 6,
- Fig. 8: eine Draufsicht des Lenkungsumkehrmechanismus und der Lenkung,
- Fig. 9: eine weitere Ansicht gemäß Fig. 8,
- Fig. 10: eine Seitenansicht eines Nockenelements der Lenkung,
- Fig. 11: eine weitere Seitenansicht des Nockenelements aus Fig. 10,
- Fig. 12: eine Ansicht der mit einer Lenkwelle verbundenen Lenkung,
- Fig. 13: eine perspektivische Seitenansicht eines Folgerelements von rechts,
- Fig. 14: eine perspektivische Seitenansicht des Folgerelements von links,
- Fig. 15: einen Lenksteuerwellenarm der Lenkung und
- Fig. 16: einen Folgerarm.

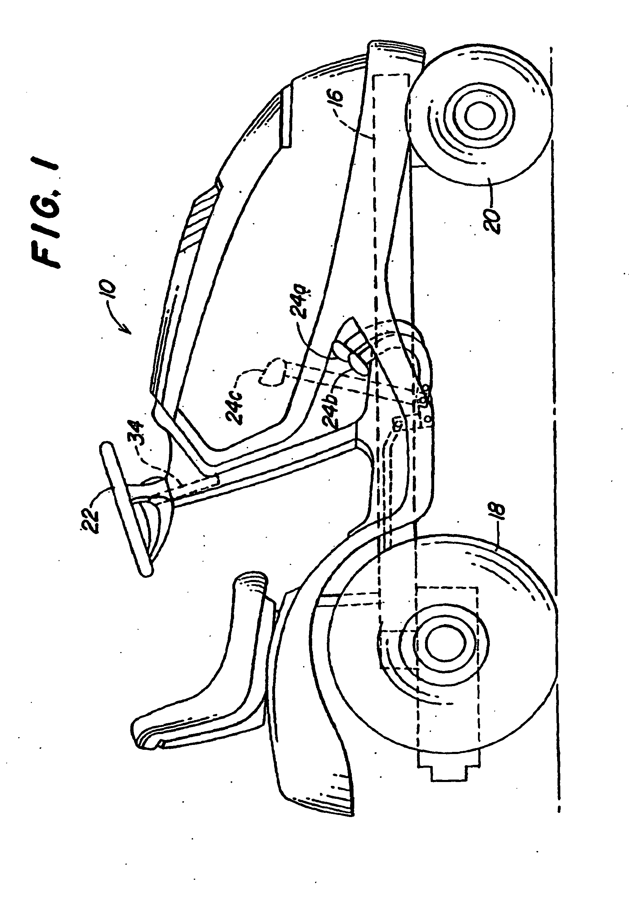

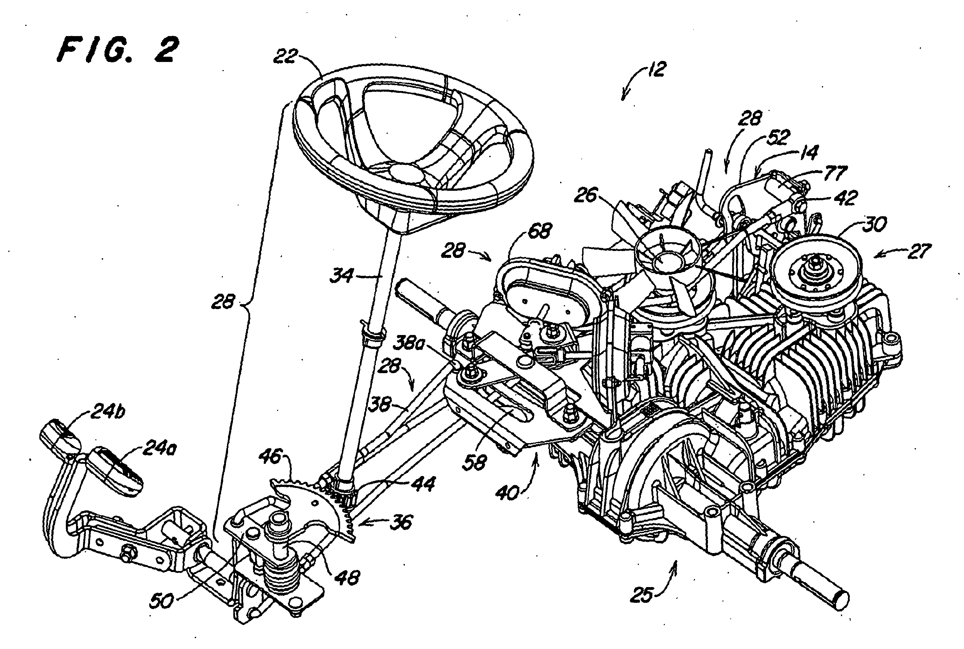

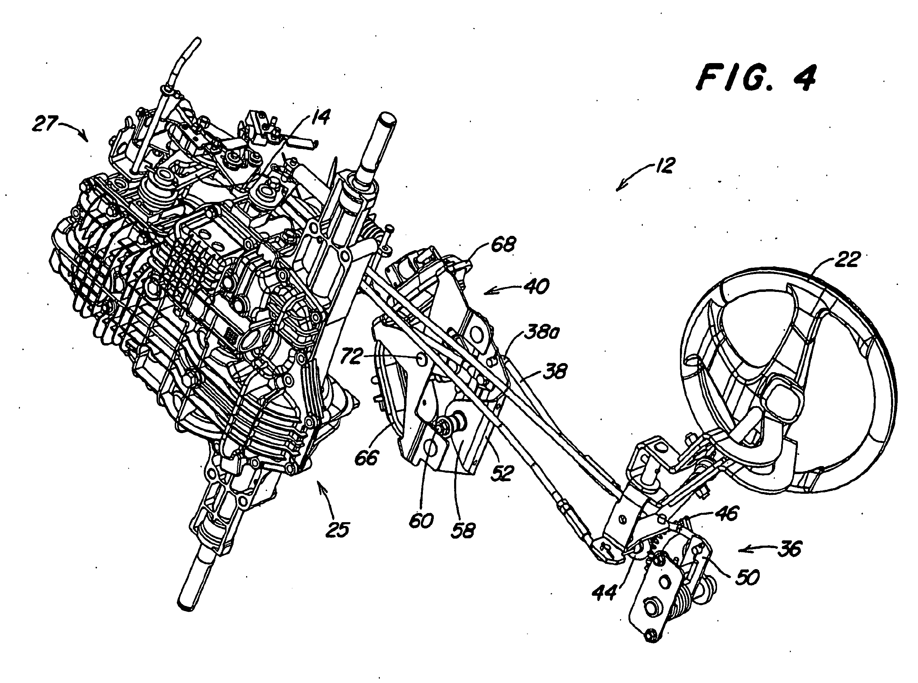

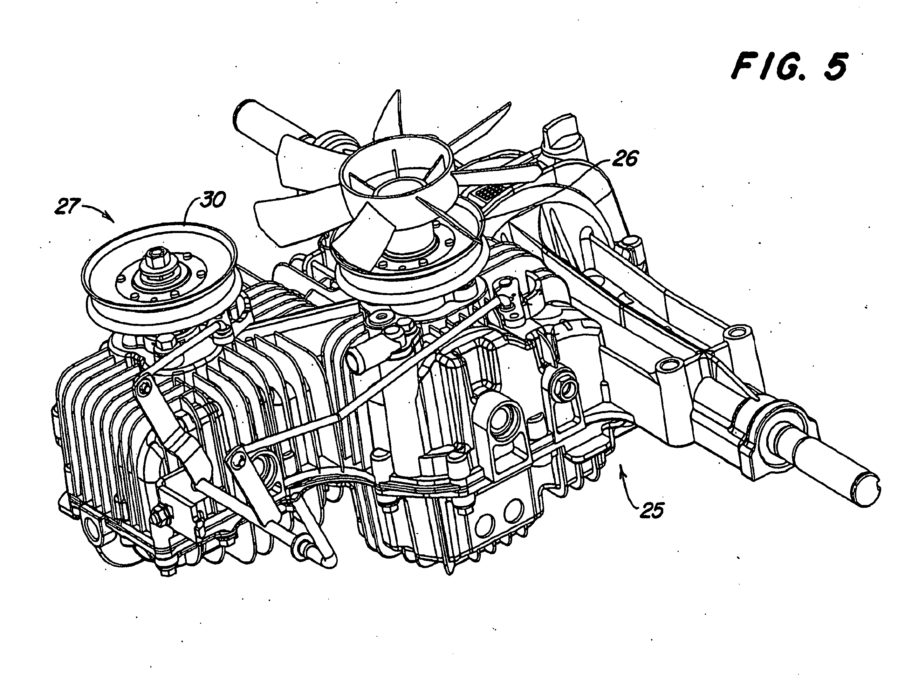

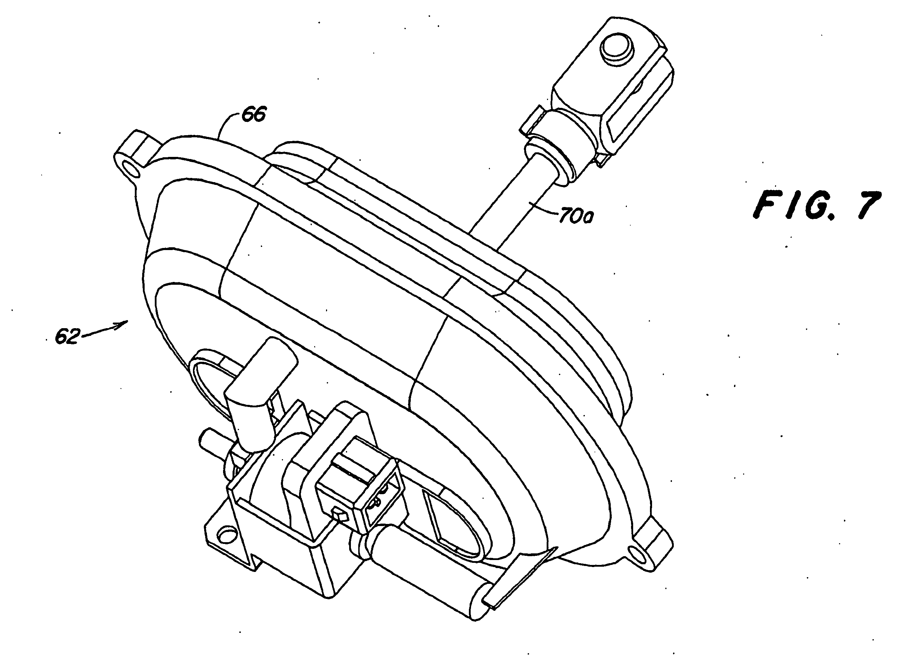

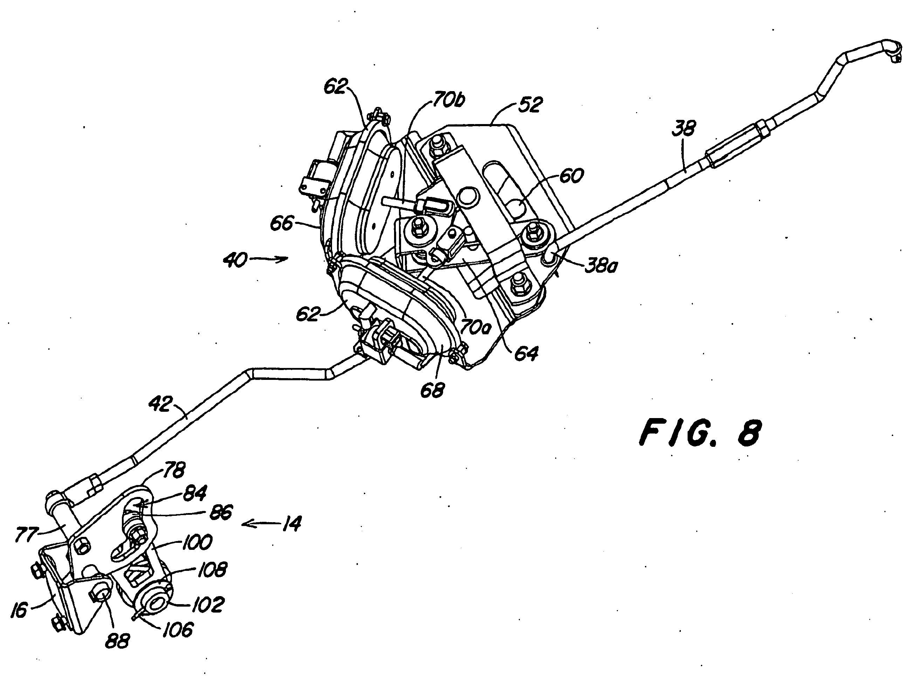

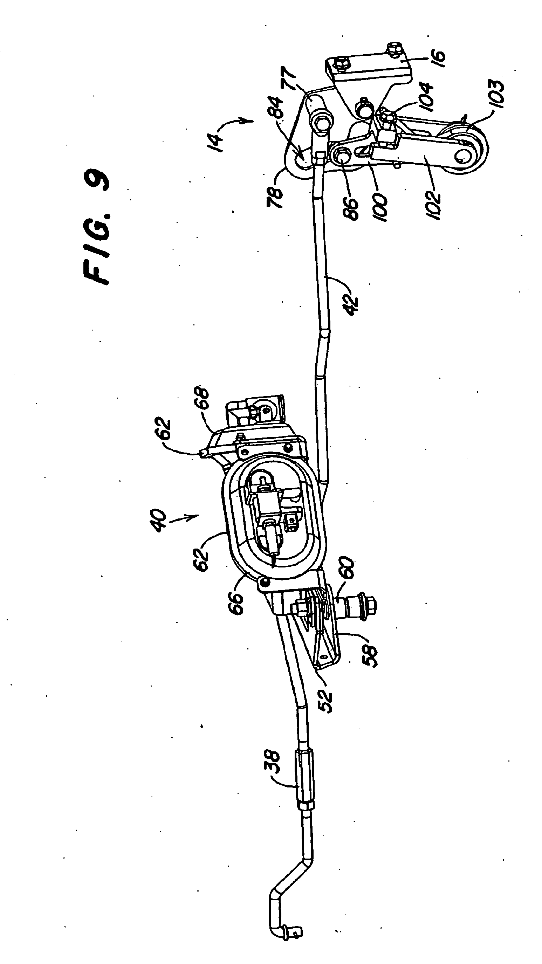

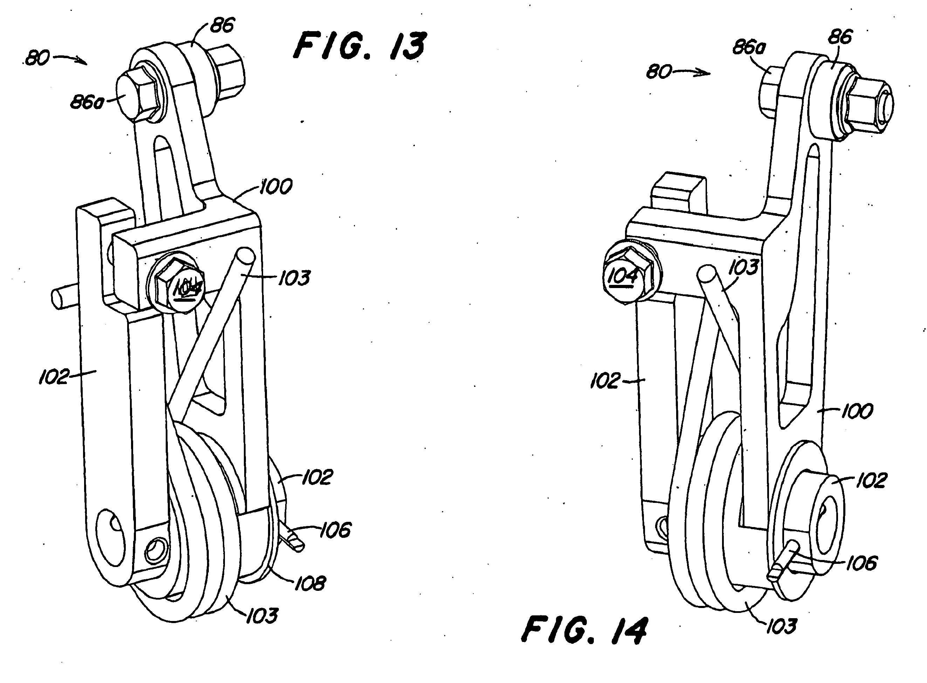

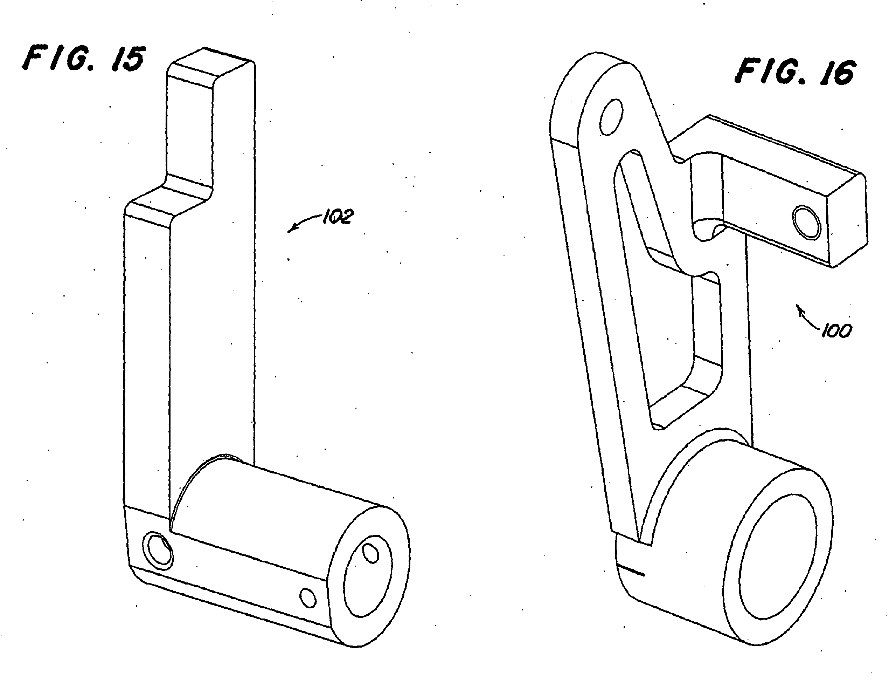

Es wird nun auf die Zeichnung Bezug genommen, deren Figuren 1 bis 16 einen Rasentraktor bzw. ein Fahrzeug 10 zeigen, welches ein Getriebe 12 mit einer Lenkeinheit 14 entsprechend einer Ausführungsform der vorliegenden Erfindung aufweist. Das Fahrzeug 10 weist in einer Ausführungsform einen Rahmen 16, eine Mehrzahl von angetriebenen Rädern 18, welche drehbar mit dem Rahmen 16 verbunden sind, einen Antrieb (nicht gezeigt), welcher mit den antreibbaren Rädern 18 über das Getriebe 12 wirksam verbunden ist, eine Mehrzahl von Freilaufrädern 20, welche mit dem Rahmen 16 drehbar verbunden sind, einen oder mehrere Steuerhebel, ein Lenkrad oder eine andere passende handbetätigte Lenkeinrichtung 22, welche mit dem Getriebe 12 verbunden ist, um die Fahrrichtung des Fahrzeugs 10 zu steuern und eine Mehrzahl von Pedalen 24a - 24c, welche wirksam mit dem Getriebe 12 verbunden sind, um die Bewegung des Fahrzeugs 10 zu steuern, auf.

Das Getriebe 12 des Fahrzeugs 10 weist ein passendes Fahrgetriebe 25, welches Bewegung von dem Antrieb zu Antriebsriemenscheiben 26 der angetriebenen Räder 18 überträgt und ein passendes Lenkgetriebe 27 auf, welches Bewegung von der Lenkeinrichtung 22 zu dem Fahrgetriebe 25 überträgt, um die Fahrtrichtung des Fahrzugs 10 zu steuern. In einer Ausführungsform weist das Getriebe des Fahrzeugs 10, die in dem US Patent mit der Nr. 6,196,342, welches am 6. März 2001 veröffentlicht wurde und welches durch diese Bezugnahmen in seiner Gesamtheit einbezogen wird, offenbarten Mechanismen und Bauteile auf. Die Pedale 24a - 24c weisen ein vorderes Pedal 24a zum Antrieb des Fahrzugs 10 nach vorn, ein rückwärtiges Pedal 24b, um das Fahrzeug in die entgegengesetzte Richtung anzutreiben, und ein Bremspedal 24c zum Anhalten des Fahrzeugs 10 auf. Die Pedale 24a - 24c sind mit den angetriebenen Rädern 18 über das Fahrgetriebe 25 wirksam verbunden.

In der gezeigten Ausführungsform wechselt das Fahrzeug 10 die Richtung aufgrund einer relativen Differenz der Rotationsgeschwindigkeit der angetriebenen Räder 18 zueinander. Entsprechend ist die Steuereinrichtung 22 wirksam mit den angetriebenen Rädern 18, vorzugsweise über die unten beschriebene Lenkeinheit 14, verbunden. Folglich bewirkt eine Bedienungsperson, wenn sie auf die Lenkeinrichtung 22 drückt, an ihr zieht oder sie dreht, dass die rechten und linken angetriebenen Räder 18 mit unterschiedlichen Relativgeschwindigkeiten rotieren. Diese Differenz der Drehbewegung bewirkt, dass das Fahrzeug 10 seine Fahrtrichtung bezogen auf eine Geradeaus- oder Vorwärtsfahrt nach rechts oder links verändert.

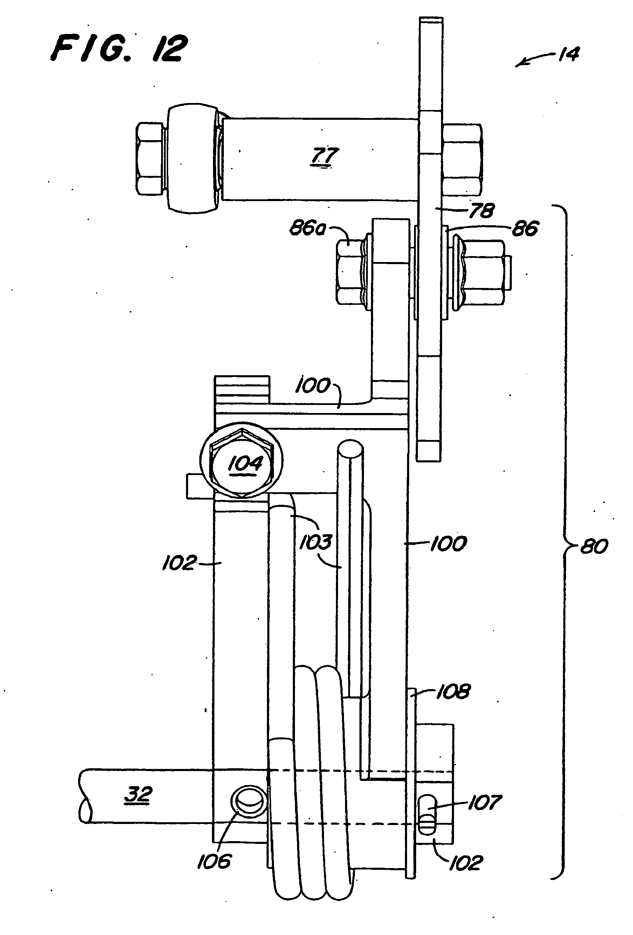

In einer Ausführungsform weist das Lenkgetriebe 27 eine Lenkriemenscheibe 30 auf, welche Bewegung von dem Antrieb zu Lenkgetriebezylindern (nicht gezeigt) überträgt, welche wirksam mit den angetriebenen Rädern 18 verbunden sind, und ein Lenkgestänge 28 auf, welches die Lenkeinrichtung 22 mit einer Lenkwelle 32 (in Fig. 12 gezeigt) verbindet, welche selbst mit den Lenkgetriebezylindern in Verbindung steht, um die Rotation der angetriebenen Räder 18 mit Bezug zueinander zu steuern. Das Lenkgestänge 28 weist eine Lenkwelle 32, welche mit der Lenkeinrichtung 22 verbunden ist, einen Lenkzahnradsatz bzw. eine Lenkzahnradzusammenbau 36, welcher mit der Lenkwelle 34 verbunden ist, einen länglichen vorderen Lenkarm 38, welcher mit dem Lenkzahnradzusammenbau 36 verbunden ist, einen Lenkmechanismus 40 mit einer Rückwärtsfahrtlogik, der mit dem Lenkarm 38 verbunden ist, einem länglichen hinteren Lenkarm 42, der mit dem Lenkmechanismus 40 verbunden ist und die Lenkeinheit 14 auf, die sowohl mit dem hinteren Lenkarm 42 als auch der Lenkwelle 32 verbunden ist.

Der Lenkzahnradzusammenbau 36 weist vorzugsweise ein Lenkritzel 44, welches mit einem Lenksektorzahnrad 46 kämmt, eine Lenkwelle 48, welche mit dem Lenksektorzahnrad 46 in Verbindung steht, und einem Lenkarm 50 auf, der mit der Lenkwelle 48 verbunden ist. Wenn die Bedienungsperson die Lenkeinrichtung 22 (beispielsweise im Uhrzeigersinn oder gegen den Uhrzeigersinn) bewegt, greift das Lenkritzel 44 in das Lenksektorzahnrad 46 ein, und versetzt das Lenksektorzahnrad 48 in Drehung. Wenn die Lenkwelle 48 rotiert, schwenkt der Lenkarm 50, wodurch sich der Lenkarm 38 bezogen auf den Rahmen 16 in Abhängigkeit von der Richtung in der die Bedienungsperson die Lenkeinrichtung 22 dreht, nach vorn oder hinten bewegt. Der bestimmte Durchmesser des Lenkritzels 44 in Bezug zu dem Lenksektorzahnrad 46 bestimmt ein festes Übersetzungsverhältnis. Dieses feste Übersetzungsverhältnis bestimmt, wie viele Male (oder in welchem Ausmaß) die Bedienungsperson die Lenkeinrichtung 22 zu drehen hat, um die gewünschte Änderung der Fahrtrichtung des Fahrzeugs zu erreichen.

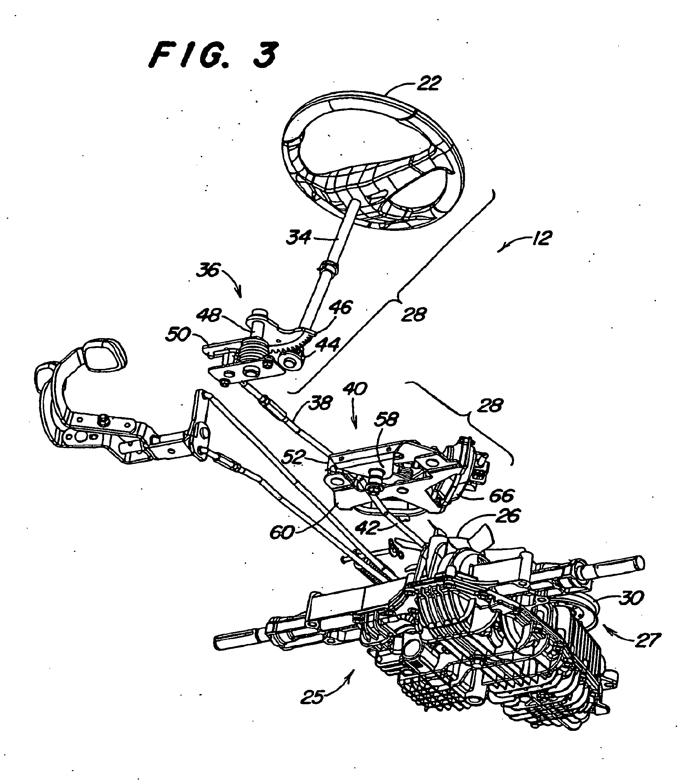

Wie es am besten in den Figuren 3, 4 und 6 bis 9 gezeigt wird, weist der Lenkmechanismus 40 ein Nockenelement 52 auf, welches eine geschlitzte Platte 54, die einen Schlitz 56 bestimmt und ein Nockenfolgerelement 58 aufweist, welches das Nockenelement 52 schwenkbar mit dem Rahmen 16 verbindet. Vorzugsweise verbindet eine Schwenkachse 60 das Nockenfolgerelement 58 drehbar mit dem Fahrzeugrahmen 16, so dass das Nockenelement 52 um eine durch die Schwenkachse 60 definierte Achse schwenken kann. Darüber hinaus weist das Nockenelement 52 einen oder mehrere passende Betätigungsmechanismus/men 62 auf, welche(r) ein Schaltelement 64 betätigt/en. Es ist zu bevorzugen, dass die Betätigungsmechanismen 62 einen Rückwärtsschaltsolenoid 66 und einen Vorwärtsschaltsolenoid 68 aufweisen. Der Rückwärtsschaltsolenoid 66 und der Vorwärtsschaltsolenoid 68 weisen entsprechende Stangen 70a und 70b auf. Die Stangen 70a und 70b können in Abhängigkeit von dem Betrieb des Rückwärtsschaltsolenoids 66 und des Vorwärtsschaltsolenoids ausgefahren oder zurückgezogen werden. Ein rückwärtiger Endbereich 64a des Schaltelements 64 ist mit dem Nockenelement 52 über eine Schwenkachse oder ein anderes passendes Befestigungsmittel 52 schwenkbar verbunden. Ein vorderer Endbereich 64b des Schaltelements 64 weist eine Wand auf, welche eine Aussparung zur Aufnahme einer Schraube oder einer Schwenkachse 64c bestimmt. Die Schwenkachse 64c verbindet einen vorderen Endbereich 42a des länglichen rückwärtigen Lenkarms 42 mit dem vorderen Endbereich 64b des Schaltelements.

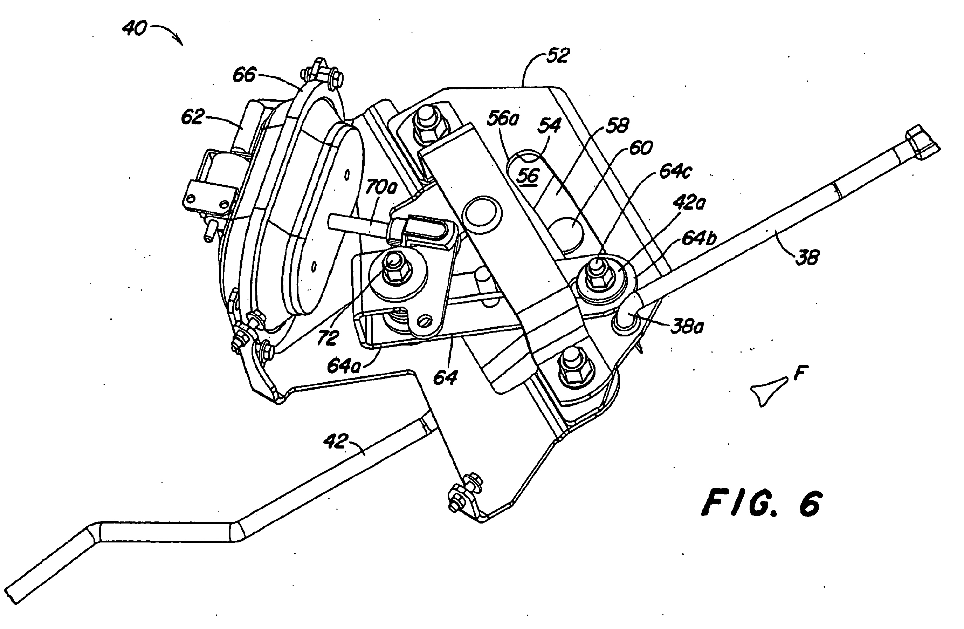

Der Rückwärtsschaltsolenoid 66 und der Vorwärtsschaltsolenoid 68 sind anfangs derart eingebaut, dass die Stange 70b zurückgezogen wird, wenn die Stange 70a ausgefahren wird oder die Stange 70a zurückgezogen wird, wenn die Stange 70b ausgefahren wird. Der Rückwärtsschaltsolenoid 66 und der Vorwärtsschaltsolenoid 68 werden durch einen passenden elektrischen Schalter (nicht gezeigt) gesteuert. Der Schalter weist vorzugsweise einen mechanischen Kolben auf, der in Abhängigkeit von der Stellung eines Antriebssteuerarms (nicht gezeigt) des Fahrgetriebes 25 eine ausgefahrene oder eine zurückgezogene Stellung aufweist. Wenn das Fahrzeug 10 in Vorwärtsrichtung fährt, schwenkt der Antriebssteuerarm in eine Vorwärtsstellung und wenn das Fahrzeug 10 in Rückwärtsrichtung fährt, schwenkt der Antriebssteuerarm in eine Rückwärtsstellung. Entsprechend sendet der Schalter, wenn sich das Fahrzeug in Vorwärtsrichtung bewegt, ein Vorwärtssignal an den Betätigungsmechanismus 62. Bei Erhalt dieses Vorwärtssignals, fährt der Rückwärtsschaltsolenoid 66 die Stange 70a aus und der Vorwärtsschaltsolenoid 68 zieht die Stange 70b zurück. Als Ergebnis bewegt das Schaltelement 64 den vorderen Endbereich 42a des rückwärtigen Schaltarms 42 verhältnismäßig dicht an den vorderen Lenkarm 38 heran, wie dies in Fig. 6 dargestellt ist. In dieser Stellung bewegt sich der rückwärtige Lenkarm 42 auch noch vorn, wenn der vordere Lenkarm 38 sich nach vorn bewegt und nach rückwärts, wenn der vordere Lenkarm 38 sich nach rückwärts bewegt.

Daher wird, wenn das Fahrzeug 10 vorwärts fährt und die Bedienungsperson die Lenkeinrichtung 22 beispielsweise nach links bewegt, sich der vordere Lenkarm 38 nach rückwärts bewegen. Dies bewirkt, dass das Lenkgetriebe 27 eine rückwärts gerichtete Rotationskraft an das linke angetriebene Rad 18 anlegt und so seine Vorwärtsgeschwindigkeit relativ zu dem rechten angetriebenen Rad 18 verringert. Das Fahrzeug 10 wird dann bezogen auf eine verhältnismäßig gerade Fahrtrichtung nach links drehen. Die gleiche Logik findet für eine Rechtsdrehung Anwendung.

Wenn die Bedienungsperson das Fahrzeug 10 in Rückwärtsrichtung betreibt, überträgt der elektrische Schalter ein Rückwärtssignal an den Betätigungsmechanismus 62. Dieses Rückwärtssignal bewirkt, dass der Rückwärtsschaltsolenoid 66 die Stange 70a zurückzieht, während der Vorwärtsschaltsolenoid 68 die Stange 70b ausfährt. Der vordere Endbereich 64b des Schaltelements 64 schwenkt dann in dem Schlitz 56 in eine Stellung 56a, welche am weitesten von dem rückwärtigen Endbereich 38a des vorderen Lenkarms 38 entfernt ist. In dieser Stellung wirkt das Nockenelement 52 als ein Hebel, welcher die Bewegung des vorderen Lenkarms 38 in eine umgekehrte Bewegung des rückwärtigen Lenkarms 42 umwandelt. Wenn die Bedienungsperson beispielsweise das Fahrzeug 10 in Rückwärtsrichtung betreibt und die Lenkeinrichtung nach links oder entgegen dem Uhrzeigersinn dreht, bewegt sich der vordere Lenkarm 38 nach rückwärts, der rückwärtige Lenkarm 42 aber bewegt sich nach vorn. Entsprechend legt das Lenkgetriebe 27 eine nach vorwärts gerichtete Drehkraft an das linke angetriebene Rad 18 an, wodurch dessen nach rückwärts gerichtete Geschwindigkeit relativ zu dem rechten angetriebenen Rad 18 reduziert wird. Das Fahrzeug 10 schwenkt dann im Uhrzeigersinn nach rückwärts, wie dies ein Kraftwagen oder ein anderes übliches Fahrzeug tun würde. Ohne den Lenkungsumkehrmechanismus 40 würde das Fahrzeug 10, wenn es von einer Bedienungsperson in Rückwärtsrichtung betrieben wird, entgegengesetzt zu der von einem typischen Benutzer von Kraftfahrzeugen oder konventionellen Traktoren erwarteten Richtung lenken.

Es sollte deutlich sein, dass die vorliegende Erfindung in anderen Ausführungsformen keinen derartigen Lenkungsumkehrmechanismus 40 aufweisen oder mit einem solchen verbunden sein muss. Bedienungspersonen von Fahrzeugen 10 können die passenden Lenkfähigkeiten zum Betrieb des Fahrzeugs 10 ohne die Lenklogik, die von dem Lenkungsumkehrmechanismus 40 zur Verfügung gestellt wird, entwickeln. Darüber hinaus sollte es klar sein, dass das Lenkgestänge in anderen Ausführungsformen eine passende Lenkeinrichtung, wie einen Handhebel, welcher in Längsrichtung bewegt werden kann, wie auch drehbare Handelemente unterschiedlicher Ausführungen aufweisen kann. Die Lenkwelle, der Zahnradzusammenbau und die Lenkarme des Lenkgestänges können jede passende Geometrie oder lineare Anordnung, einschließlich aber nicht begrenzt auf die in den Figuren 1 bis 16 gezeigten Anordnung, aufweisen.

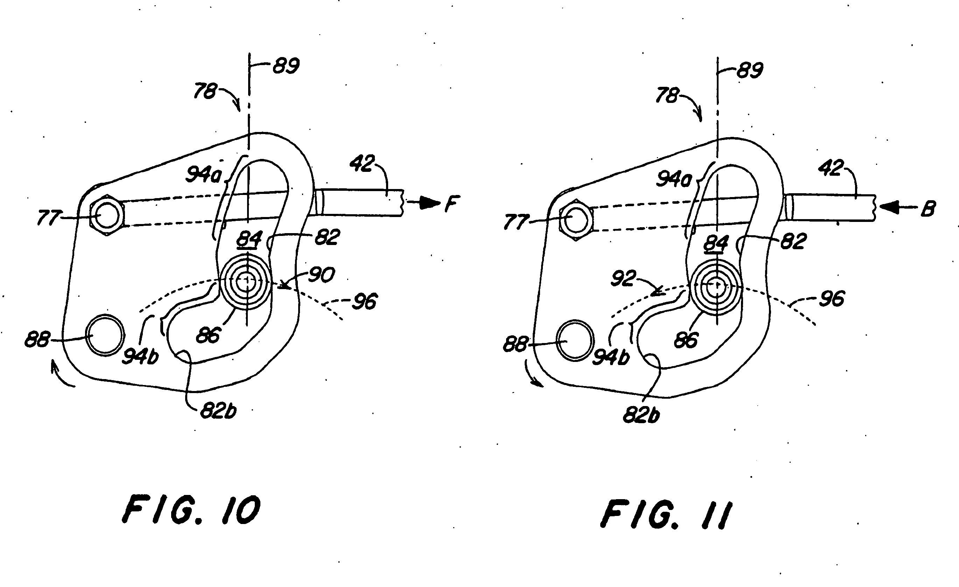

In jedem Fall ist der rückwärtige Lenkarm 42 drehbar mit der Lenkeinheit 14 über eine passende Schraube, ein Befestigungsmittel oder eine Schwenkwelle 77 verbunden, welche eine Bewegung des rückwärtigen Lenkarms 42 an die Lenksteuerwelle 32 des Lenkgetriebes 27 überträgt. Wie es am Besten in den Figuren 12 - 16 gesehen werden kann, weist die Lenkeinheit 14 einen oder mehrere Nockenarme oder Nockenelemente 78 auf, welche mit einem oder mehreren Folgerelement(en) 80 zusammenwirken und diese verschwenken. Das Folgerelement 80 ist mit der Lenksteuerwelle 32 verbunden. Das Nockenelement 78 weist ein Angriffselement oder eine Angriffsfläche bzw. ein Leitelement 82 für das Folgerelement 80 auf. Bei dem Leitelement 82 handelt es sich vorzugsweise um eine ungleichmäßige geschlitzte Platte, welche einen Nockenschlitz bzw. eine Aussparung 84 bestimmt. Wie es in den Figuren 10 und 11 illustriert wird, gleitet ein Eingriffelement 86, welches unten beschrieben wird, in der Aussparung 84, während es an dem Leitelement 82 angreift. Das Nockenelement 78 ist mit dem Rahmen 16 über eine passende Schwenkachse oder ein Befestigungsmittel 88 verbunden.

Das Eingriffelement 86 weist eine Neutralstellung 89 auf, welche eine relativ gerade Fahrtrichtung des Fahrzeugs 10 bestimmt. Wenn der rückwärtige Lenkarm 42 nach vorn bewegt wird, schwenkt das Nockenelement 78 um die durch die Schwenkwelle 88 definierte Achse. Das Leitelement 82 zwingt das Eingriffelement 86 in eine Richtung 90. Wenn sich der rückwärtige Lenkarm 42 bewegt, hängt das Ausmaß, in dem das Leitelement 82 das Eingriffelement 86 in die Richtung 90 verlagert, von der bestimmten Konfiguration oder dem Profil des Leitelements 82 ab. Entsprechend rotiert das Nockenelement 78, wenn der rückwärtige Lenkarm 72 nach rückwärts bewegt wird, wie dies in Fig. 11 dargestellt wird, gegen den Uhrzeigersinn um die Schwenkachse bzw. das Befestigungsmittel 88. Das Eingriffelement 86 schwenkt dann in Richtung 92.

Vorzugsweise weist das Leitelement 82 eine Mehrzahl gekrümmter Bereiche 94a und 94b auf. Jeder gekrümmte Bereich 94a und 94b ist einem bestimmten Grad an Lenkempfindlichkeit für die Bedienungsperson zugeordnet. Beispielsweise bewirken die gekrümmten Bereiche 94a oder 94b für verhältnismäßig kleine Eingangsbewegungen der Bedienungsperson in Abhängigkeit von der Richtung, dass das Eingriffelement 86 einen relativ kleinen Betrag an Bewegung entlang eines Folgerpfads 96 aufweist. Wenn der rückwärtige Lenkarm 42 beispielsweise nach vorn bewegt wird, bewegt sich das Eingriffelement 86 in Richtung 90 in dem gekrümmten Bereich 94a. Hier bewegt sich das Eingriffelement 86 mit einer langsameren Schwenkrate als der Schwenkrate des Nockenelements 78. Wenn der obere Endbereich 82a der Angriffsfläche bzw. des Leitelements 82 an dem Eingriffelement 86 angreift, schwenkt der obere Endbereich 82a das Eingriffelement 86 mit einer schnelleren Schwenkrate. Ähnlich, wie dies in Fig. 11 dargestellt ist, schwenkt der gekrümmte Bereich 94b das Eingriffelement 86, wenn der rückwärtige Schwenkarm 42 nach hinten bewegt wird, mit einer Schwenkrate, welche geringer ist als die Schwenkrate des ganzen Nockelements 78. Sobald der untere Endbereich 82b des Leitelements 82 an dem Folgerelement 86 angreift, schwenkt das Eingriffelement 86 mit einer schnelleren Schwenkrate.

Mit anderen Worten wandelt das Profil des ungleichförmigen Leitelements 82 die Lenkeingangsbewegung einer Bedienungsperson, welche von der Lenkeinrichtung 22 zu dem Lenkarm 42 übertragen wird, in eine variable Lenkausgabebewegung um. Das Lenkverhältnis zwischen der Lenkeingangsbewegung und der Lenkausgabebewegung liegt in einem Bereich. Das bestimmte Lenkverhältnis, das in diesem Bereich realisiert ist, hängt von dem Ausmaß an Lenkeingangsbewegung ab. Die Lenkeinheit 14 verändert dieses Lenkverhältnis als Antwort auf verschiedene Eingangsbewegungen der Bedienungsperson automatisch.

Entsprechend gleitet das Eingriffelement 86, wenn die Bedienungsperson verhältnismäßig kleine oder geringfügige Drehungen ausübt, in der Aussparung 84 hin und her, wobei es den oberen Endbereich 82a und den unteren Endbereich 82 vermeidet. Wenn die Bedienungsperson jedoch eine verhältnismäßig bedeutsame oder große Drehung ausführt, gleitet das Eingriffelement 86 in und greift dann an dem unteren Endbereich 82b an, an welchem Punkt das Nockenelement 78 eine verhältnismäßig große Ausgabebewegung in dem Eingriffelement 86 erzeugen wird. Entsprechend erhält das Nockenelement 78 die Lenkeingangsbewegung von der Bedienungsperson in einem bestimmten Ausmaß und erzeugt eine Lenkausgabebewegung in der Art, dass das Verhältnis der Lenkeingangsbewegung zu der Lenkausgabebewegung in Abhängigkeit von dem Ausmaß der Lenkeingabebewegung variiert. Dieses Übersetzungsverhältnis ist vorzugsweise kleiner für verhältnismäßig kleine Lenkeingangsbewegungen und größer für verhältnismäßig große Lenkeingangsbewegungen. Die Lenkausgabebewegung des Eingriffelements 86 wird zu der Lenksteuerwelle 32, wie es unten beschrieben wird, übertragen.

Wie es am besten in den Figuren 12 bis 15 dargestellt wird, weist das Folgerelement 80 einen Folgerarm 100 auf, welcher mit dem Eingriffelement 86 über eine passende Schraube oder ein Befestigungsmittel 86a verbunden ist, einen Lenksteuerwellenarm 102, der mit der Lenksteuerwelle 32 verbunden ist und durch den Folgerarm 100 aufgenommen wird, und einen passenden Kraftspeicher 103, wie eine Torsionsfeder oder eine andere Federart, welche den Folgerarm 100 gegen den Lenksteuerwellenarm 102 drückt, auf. Vorzugsweise weist das Folgerelement 80 auch einen einstellbaren Abstandhalter 104, wie eine Stellschraube, auf, welche die Winkelstellung des Folgerarms 100 relativ zu dem Lenksteuerwellenarm 102 um die Achse, welche durch die Lenksteuerwelle 32 bestimmt wird, ausgleicht. Das Folgerelement 80 weist vorzugsweise auch ein passendes Befestigungsmittel 106, wie eine Schraube, welche den Lenksteuerwellenarm 102 mit der Lenksteuerwelle 32 verbindet, und einen Stift oder ein anderes passendes Befestigungsmittel 107 auf, welches in Kombination mit einem Unterlegscheibenrückhalteelement 108 den Folgerarm 102 in Eingriff entlang der Achse, welche durch die Lenksteuerwelle 32 bestimmt wird, zu halten. Der einstellbare Abstandhalter 104 befähigt die Bedienungsperson die Neutral- oder Geradeausstellung des Fahrzeugs 70 einzustellen. Driftet das Fahrzeug 10 beispielsweise nach rechts oder nach links, so kann die Bedienungsperson dies korrigieren, indem sie den einstellbaren Abstandhalter 104 einstellt.

Obwohl die Lenkeinheit 14 einen mechanischen Nocken aufweist, sollte es deutlich sein, dass die vorliegende Erfindung statt dessen ein passendes elektronisches Nockensystem aufweisen kann, welches ein passendes Computerprogramm einschließt, um ein Nockenprofil zum gleichen Zweck wie das Nockenelement 78 zu generieren. Es sollte klar sein, dass die Lenkeinheit gemäß der vorliegenden Erfindung eine passende Umwandlungseinrichtung oder Bewegungsübermittler, einschließlich, aber nicht begrenzt auf einen Nockenzusammenbau, welche einen Bereich von Umwandlungsfaktoren bzw. Übersetzungsverhältnissen produziert oder anderweitig zur Verfügung stellt.

Darüber hinaus sollte es klar sein, dass die Lenkeinheit 14 gemäß der vorliegenden Erfindung wirksam mit einem frei rotierenden, üblichen gelenkten Rädern verbunden sein kann, welche nicht durch den Antrieb eines Fahrzeugs angetrieben werden. Beispielsweise ist bei einem konventionellen Traktor oder Fahrzeug, die Lenkeinrichtung oder das Lenkrad wirksam mit den Vorderrädern verbunden, welche nach links oder rechts schwenken, um die Fahrtrichtung des Fahrzeugs zu steuern. Die Hinterräder sind üblicherweise angetriebene Räder, welche mit der gleichen Geschwindigkeit in Vorwärts- und Rückwärtsrichtung drehen. Die Lenkeinheit 14 der vorliegenden Erfindung kann wirksam mit einem Lenkgestänge eines derartigen Fahrzeugs verbunden sein, welches mit frei drehbaren, lenkbaren Rädern in Verbindung steht.

Aus der Beschreibung sollte auch hervorgegangen sein, dass das Lenkgestänge der vorliegenden Erfindung an jedem Fahrzeug, Traktor, Mähgerät, Schneepflug, Schneegebläse, Vakuumsauger, Kehrmaschine, Motorgerät oder Freizeitfahrzeug, welches einen Lenkzusammenbau oder eine Lenkeinheit zur Steuerung der Fahrzeugrichtung aufweist, eingesetzt werden kann.

Die Lenkeinheit gemäß der vorliegenden Erfindung stellt der Bedienungsperson eines Fahrzeugs, wie eines Traktors, in einer Ausführungsform eine Lenkempfindlichkeit zur Verfügung, deren Grad davon abhängig, in welchem Maße die Bedienungsperson das Lenkrad dreht. Das Lenkgestänge weist ein Nockenelement mit einem Profil auf, welches einen Bereich von Lenkeingang- zu Lenkausgangübersetzungsverhältnissen liefert. In einer Ausführungsform wird ein größeres Verhältnis für verhältnismäßig große Drehungen und ein niedrigeres Verhältnis für verhältnismäßig kleine Drehungen verwendet. Entsprechend hat die Bedienungsperson eine erhöhte Lenkkontrolle.

Es sollte deutlich geworden sein, dass verschiedene Veränderungen und Modifikation der vorliegenden bevorzugten Ausführungsform, welche beschrieben wurde, für den Fachmann offensichtlich sind. Derartige Veränderungen und Modifikationen können durchgeführt werden, ohne von dem Geist und dem Schutzbereich der vorliegenden Erfindung abzuweichen und ohne die beabsichtigen Vorteile zu verringen. Es ist daher beabsichtigt, dass derartige Veränderungen und Modifikationen durch die folgenden Ansprüche umfasst werden.

## Patentansprüche

1. Lenkung eines Fahrzeugs (10) mit einer Lenkeinheit (14), welche eine von einer Lenkeinrichtung (22) kommende Lenkeingangsbewegung in eine Lenkausgabebewegung umwandelt, welche zur Bestimmung der Fahrtrichtung des Fahrzeugs (10) auf wenigstens ein Rad (18) des Fahrzeugs (10) wirkt, wobei das Ausmaß der Lenkeingangsbewegung und das Ausmaß der Lenkausgabebewegung in einem Übersetzungsverhältnis zueinander stehen, welches in Abhängigkeit von dem Ausmaß der Lenkeingangsbewegung variiert, wobei die Lenkeinheit (14) ein Nockenelement (78), das ein Leitelement (82) und ein mit diesem zur Erzielung des variablen Übersetzungsverhältnisses derart wirksam verbundenes Folgerelement (80) aufweist, dass das Nockenelement (78) in Abhängigkeit von einer Bewegung der Lenkeinrichtung (22) mit einer ersten Schwenkrate verschwenkt und das Folgerelement (80) mit einer von der ersten Schwenkrate abweichenden Schwenkrate verschwenken kann,
**dadurch gekennzeichnet, dass** das Leitelement (82) wenigstens einen gekrümmten Bereich (94) aufweist.

2. Lenkung nach Anspruch 1, **dadurch gekennzeichnet, dass** das Nockenelement (78) ein ungleichförmiges Leitelement (82) aufweist, welches vorzugsweise eine Aussparung (84) bildet bzw. als eine solche ausgeführt ist.

3. Lenkung nach einem oder mehreren der vorherigen Ansprüche, **dadurch gekennzeichnet, dass** das Nockelement (78) mit dem Folgerelement (80) über ein Eingriffelement (86) wirksam verbunden ist, welches an dem Leitelement (82) angreift, indem es vorzugsweise in der Aussparung (84) gleitet.

4. Lenkung nach Anspruch 3, **dadurch gekennzeichnet, dass** sich das Eingriffelement (86) mit einer von der Schwenkrate des Nockenelements (78) abweichenden Schwenkrate bewegen kann.

5. Lenkung nach einem oder mehreren der vorherigen Ansprüche, **dadurch gekennzeichnet, dass** das Rad (18) antreibbar und vorzugsweise wirksam mit einer Lenkwelle (32) verbunden ist.

6. Lenkung nach Anspruch 5, **dadurch gekennzeichnet, dass** das Folgerelement (80) wirksam mit der Lenkwelle (32) verbunden ist.

7. Lenkung nach einem oder mehreren der vorherigen Ansprüche, **gekennzeichnet durch** einen Lenkungsumkehrmechanismus (40), der eine umgekehrte Lenklogik für eine Fahrt in Rückwärtsrichtung zur Verfügung stellt.

8. Lenkung nach einem oder mehreren der vorherigen Ansprüche, **dadurch gekennzeichnet, dass** sie wirksam mit wenigstens einem Lenkgetriebe (27) des Fahrzeugs (10) verbunden ist.

9. Verfahren zur Lenkung eines Fahrzeugs (10), wobei durch eine Bedienungsperson Lenkeingangsbewegungen unterschiedlicher Stärke auf eine Lenkeinrichtung (22) eines Fahrzeugs (10) ausgeübt werden und diese über eine Lenkeinheit (14) in Form einer Lenkausgabebewegung an wenigstens ein Rad (18) des Fahrzeugs (10) zur Bestimmung einer Fahrtrichtung des Fahrzeugs (10) weitergegeben werden, wobei die Lenkeinheit (14) zwischen der Lenkeingangsbewegung und der Lenkausgabebewegung ein innerhalb eines Bereichs variables Übersetzungsverhältnis zur Verfügung stellt und abhängig von der Stärke der Lenkeingangsbewegung ein bestimmtes Übersetzungsverhältnis zur Erzeugung einer Lenkausgangsbewegung verwendet wird, **gekennzeichnet durch** die Verwendung einer Lenkung gemäß einem oder mehreren der Ansprüche 1 bis 8.

## Claims

1. Steering system of a vehicle (10) having a steering unit (14) which converts a steering input movement which comes from a steering device (22) into a steering output movement which acts on at least one wheel (18) of the vehicle (10) in order to determine the driving direction of the vehicle (10), the magnitude of the steering input movement and the magnitude of the steering output movement being in a transmission ratio with respect to one another, which transmission ratio varies as a function of the magnitude of the steering input movement, the steering unit (14) having a cam element (78), which has a guiding element (82), and a follower element (80) which is operatively connected to the former for achieving the variable transmission ratio in such a way that the cam element (78) pivots at a first pivoting rate as a function of a movement of the steering device (22) and the follower element (80) can pivot at a pivoting rate which differs from the first pivoting rate, **characterized in that** the guiding element (82) has at least one curved region (94).

2. Steering system according to Claim 1,
**characterized in that** the cam element (78) has a nonuniform guiding element (82) which preferably forms a cut-out (84) or is configured as a cut-out of this type.

3. Steering system according to one or more of the preceding claims, **characterized in that** the cam element (78) is operatively connected to the follower element (80) via an engagement element (86) which acts on the guiding element (82) by preferably sliding in the cut-out (84).

4. Steering system according to Claim 3,
**characterized in that** the engagement element (86) can move at a pivoting rate which differs from the pivoting rate of the cam element (78).

5. Steering system according to one or more of the preceding claims, **characterized in that** the wheel (18) can be driven and is preferably operatively connected to a steering shaft (32).

6. Steering system according to Claim 5,
**characterized in that** the follower element (80) is operatively connected to the steering shaft (32).

7. Steering system according to one or more of the preceding claims, **characterized by** a steering reversal mechanism (40) which provides a reversed steering logic for driving in the reverse direction.

8. Steering system according to one or more of the preceding claims, **characterized in that** it is operatively connected to at least one steering gear (27) of the vehicle (10).

9. Method for steering a vehicle (10), steering input movements of different magnitude being exerted on a steering device (22) of a vehicle (10) by an operator, and the said steering input movements being forwarded via a steering unit (14) in the form of a steering output movement to at least one wheel (18) of the vehicle (10) in order to determine a driving direction of the vehicle (10), the steering unit (14) making a transmission ratio available between the steering input movement and the steering output movement, which transmission ratio is variable within a range, and a defined transmission ratio for generating a steering output movement being used as a function of the magnitude of the steering input movement, **characterized by** the use of a steering system according to one or more of Claims 1 to 8.

## Revendications

1. Direction d'un véhicule (10) comprenant une unité de direction (14), qui convertit un mouvement d'entrée de direction provenant d'un dispositif de direction (22) en un mouvement de sortie de direction, qui agit pour définir la direction de conduite du véhicule (10) au niveau d'au moins une roue (18) du véhicule (10), l'ampleur du mouvement d'entrée de direction et l'ampleur du mouvement de sortie de direction étant en relation de rapport de démultiplication, qui varie en fonction de l'ampleur du mouvement d'entrée de direction, l'unité de direction (14) présentant un élément de came (78), qui présente un élément de guidage (82), et un élément suiveur (80) connecté fonctionnellement à celui-ci pour obtenir le rapport de démultiplication variable, de telle sorte que l'élément de came (78) pivote en fonction d'un mouvement du dispositif de direction (22) avec un premier taux de pivotement et que l'élément suiveur (80) puisse pivoter avec un taux de pivotement différent du premier taux de pivotement,
**caractérisée en ce que** l'élément de guidage (82) présente au moins une région courbe (94).

2. Direction selon la revendication 1, **caractérisée en ce que** l'élément de came (78) présente un élément de guidage (82) non uniforme, qui forme de préférence un évidement (84) ou qui est réalisé en tant que tel.

3. Direction selon l'une quelconque ou plusieurs des revendications précédentes, **caractérisée en ce que** l'élément de came (78) est connecté fonctionnellement à l'élément suiveur (80) par le biais d'un élément d'engagement (86), qui vient en prise avec l'élément de guidage (82), en glissant de préférence dans l'évidement (84).

4. Direction selon la revendication 3, **caractérisée en ce que** l'élément d'engagement (86) peut se déplacer avec un taux de pivotement différent du taux de pivotement de l'élément de came (78) .

5. Direction selon l'une quelconque ou plusieurs des revendications précédentes, **caractérisée en ce que** la roue (18) peut être entraînée et est de préférence connectée fonctionnellement à un arbre de direction (32).

6. Direction selon la revendication 5, **caractérisée en ce que** l'élément suiveur (80) est connecté fonctionnellement à l'arbre de direction (32).

7. Direction selon l'une quelconque ou plusieurs des revendications précédentes, **caractérisée par** un mécanisme d'inversion de la direction (40), qui fournit une logique de direction inverse pour une conduite en marche arrière.

8. Direction selon l'une quelconque ou plusieurs des revendications précédentes, **caractérisée en ce qu'**elle est connectée fonctionnellement à au moins une boîte de direction (27) du véhicule (10).

9. Procédé de direction d'un véhicule (10), dans lequel des mouvements d'entrée de direction de force différente sont exercés par un conducteur sur un dispositif de direction (22) d'un véhicule (10) et ceux-ci sont transmis par le biais d'une unité de direction (14) sous forme d'un mouvement de sortie de direction à au moins une roue (18) du véhicule (10) pour définir une direction de conduite du véhicule (10), l'unité de direction (14) fournissant, entre le mouvement d'entrée de direction et le mouvement de sortie de direction, un rapport de démultiplication variable à l'intérieur d'une plage et, en fonction de l'ampleur du mouvement d'entrée de direction, un rapport de démultiplication défini étant utilisé pour produire un mouvement de sortie de direction, **caractérisé par** l'utilisation d'une direction selon l'une quelconque ou plusieurs des revendications 1 à 8.
